# EUROPEAN PATENT APPLICATION

(11) **EP 2 196 443 A1**
(43) Date of publication of application: **16.06.2010**
(21) Application number: 09425496.8
(22) Date of filing: 02.12.2009
(51) Int. Cl.: C05F 5/00, C05F 11/02, C05G 1/00

(54) **Incinerated husk**

(30) Priority: 03.12.2008 IT RM20080645
(71) Applicant: Lustri, Marcello, 04023 Formia (LT) (IT)
(72) Inventor: Lustri, Marcello, 04023 Formia (LT) (IT)
(74) Representative: Cioncoloni, Giuliana

(57) **Abstract**

Derivative product of husk obtained by a thermal treatment of toasting husk up to the incineration of the same, with dehydration, sterilization and mineralization of the same, thereby obtaining a granular husk ash; and substrate for hortifloriculture based on such product.

## Description

This invention relates to a derivative product of husk for horti-floriculture.

It also relates to a substratum for horti-floriculture containing such a product.

As from general knowledge, by 'husk' a byproduct is meant coming as a scrap from the manufacture of cereals, composed of the whole of the bracts that envelope the corns. The detachment of the bracts takes place during threshing in those cereals, such as wheat or rye, in which bracts do not adhere to the caryopsis; in other cereals, such as rice, oats and spelt, which present more adherent bracts, the bracts are to be removed by a process named 'hulling'. Wheat husk accumulates as waste of threshing. It finds use as bedstead for cattle and sometimes as low-quality pasture. The husk that finds the greater applications is the rice one. It is used in gardening for mulching (a treatment aimed at preventing the growth of grass) and as a bottom for bedsteads for shed animals, such as cattle and horses. Uses are also known at present of husk as a fuel, as substance for the sophistication of feedstuff, under incinerated form in the preparation of soapy pastes, as primary product for producing furfurol, for manufacturing insulating materials (Villavecchia-Eigenmann: "Nuovo Dizionario di Merceologia e Chimica Applicata" (Ulrico Hoepli, 1974), Vol. 4°).

The concept is also known at present of the use of rice husk under natural form, that is not treated, or at most sterilized, as a substrate for horti-floriculture.

However, this use involves the shortcoming of an emerging of the husk that takes places in cultivation phase and of a successive organic decomposition of the same, with subsequent chemical reactions unfavourable for the purposes of the culture inside the substrate.

Moreover, (blond) peat is used at present as the main component as a substrate for horti-floriculture. Other component of substrates for horti-floriculture are black peat, natural soil, 'compost' (that is scraps of organic waste such as from depurators and/or cuttings of woods or gardening made to macerate or to ferment), cocoa fibres, cocoa medulla, leaves etc.

The component used in the greater quantity, and the only component which may be used in the quantity of 100%, is peat. For example, cocoa fibres cannot be used in a quantity greater than 20%.

However, peat has the shortcoming of involving its extraction and importation from Northern Europe countries, which it comes from, with the shortcoming of considerable costs.

Document EP 0 308 555 A, having the title *"Plant growth media containing rice hull ash",* referred to as Document D1 hereinafter, discloses a culture substrate containing rice husk ash in a substantially amorphous state and having a substantially porous skeletal structure. The rice husk ash is referred as the constituent that improves the characteristics of plant growth of the culture substrate and which is effective in retaining liquid and air in its pores and thereafter release them to a plant in the substrate.

However, D1 does not provide any teaching as regards how husk ash is obtained, whereby the formulations that D1 discloses are restricted to the results that may be achieved with husk ash of pre-existing art, as regards the characteristics of dehydration, sterilization and mineralization.

In the Examples D1 relates formulations that, in addition to rice husk ash and peat, include other ingredients such as pine bark, perlite, vermiculite, polystyrene beads, water-swellable polymer.

Document JP 2006 111480 A having the title *"Method of Manufacturing Highkly Soluble Siliceous Fertilizer from Husk Incineration Ash",* referred to as Document D2 hereinafter, discloses a method for manufacturing a fertilizer from husk ash. The teaching discloses in D2 are aimed at the use as raw industrial material of ashes resulting from the combustion of husk, used as a carbon-based large biomass as a source of thermal energy. In D2 porous active siliceous ash which is free from the incorporation of scrap grains produced by the high local temperature and that keeps the fine structure peculiar of husk, is obtained by adjusting the atmospheric temperature at 450-800 °C in an incineration oven and controlling combustion conditions, such as for instance the quantity of air or the temperature of the ash in the incineration of the husk in the oven.

It is the object of this invention to provide a derivative product of husk by incineration, that presents characteristics of dehydration, sterilization and mineralization substantially better than pre-existing ones for the purposes of the use thereof as a substrate for horti-floriculture.

Such an object is achieved with a derivative product of husk obtained by a thermal process of toasting of husk up to the incineration of the same, with dehydration, sterilization and mineralization of the husk itself, thereby obtaining a granular husk ash.

By 'toasting' it is meant herein a thermal treatment which is not at the flame, that is not generating heat, but utilizing the heat coming from an external source.

It is obtained thereby a granular husk ash, of the size of a few millimeters.

By 'mineralization' it i sto be meant herein the substitution of present organic compounds with inorganic compounds.

Particularly, it is envisaged that said thermal treatment is carried out by laying down natural husk at the base of burning smokestacks, subjecting it there to toasting up to incineration, with dehydration, sterilization and mineralization of the husk itself.

The husk ash product according to this invention has characteristics of dehydration, sterilization and mineralization superior to known ones.

The superior characteristics of the husk ash product of this invention derive from a different method for obtaining the same. The inventive husk ash product is obtained through toasting, whilst the husk ash product disclosed in D2 is obtained through husk combustion. In fact, the use is also envisaged in D2 of husk as a source of thermal energy in its combustion. As opposite, this invention envisages a toasting of husk that does not constitute a treatment at the flame, but a thermal treatment at the heat generated by a source external to the husk itself.

It is also the object of this invention to provide a product for the use as a substrate for both professional and hobby horti-floriculture, in which the peat only constitutes a fraction, in order to reduce the above mentioned shortcomings.

Such an object is achieved by mixing a quantity of husk treated according to a modality taught by this invention to the peat.

Particularly, the husk may be rice husk.

Therefore, it is the subject of this invention a process for manufacturing husk according to annexed Claim 1.

It is also the subject of this invention a derivative product of husk obtained with said process according to Claim 3.

It is also the subject of this invention a substrate for horti-floriculture according to Claim 5.

Preferred embodiments are disclosed in dependent claims.

This invention will be fully understood based on the following description of embodiments thereof only given as a matter of example, absolutely not of restriction.

Natural rice husk deriving as scrap of the manufacture of rice was thermally treated by laying it down at the base of burning smokestacks, fed with fuel by above. Rice husk was kept under toasting thermal treatment up to incineration, with dehydration, sterilization and mineralization of the same.

The product resulting from this treatment was a granular ash, that is not a pulverulent one, having particle size of the order of magnitude of a few millimeters. This one was made to cool and thereafter removed.

The granular ash so obtained was mixed with (blond) peat, up to obtain a homogeneous mix, tested as a substrate for horti-floriculture.

The experimental results are as follows.

### Spadifilium

Experimental tests on *Spadifilium* were carried out with the following formulations:

| | Rice husk | Blond peat |
|---|---|---|
| Formulation 1 | 30% | 70% |
| Formulation 2 | 40% | 60% |
| Formulation 3 | 50% | 50% |
| Formulation 4 | 60% | 40% |
| Formulation 5 | 70% | 30% |

The results were excellent with the formulations containing 50% peat and 50% husk and with the formulations containing 60% peat and 40% husk. It was observed a particularly noticeable state of health of the radical apparatus of plants grown in a substrate composed of such formulations, with development of the single roots to a diameter greater than 30% compared with when using normal preexisting substrates.

It was also observed an exceptional stability of the compound on a test of the duration of fourteen days. It was not found any compacting of the compound, whilst it was found an elevated quantity of air inside the same. The leaf apparatus was superior to the norm, due to the noticeable quantity of metabolizable silicium available in husk.

### Poinsettia

Tests were carried out in the case of mother plants and in the case of plants for sale. In the first case a test was carried out extended to one year, in the second case extended to six months. The radical apparatus demonstrated a development of single roots to a diameter greater than 30% as compared to with the use of normal preexisting substrates.

Tests having a positive result as well were carried out on *Pelargonium* on mother plants having the duration of one year and on plants for sale having the duration of 4 months and on *Ciclamino* on plants for sale having the duration of six months.

This invention has been disclosed referring to specific embodiments thereof, but it is to be expressly understood that variations are possible within the scope of protection thereof, which only remains defined by the annexed claims.

## Claims

1. Derivative product of husk obtained by a thermal treatment of toasting the husk up to the incineration of the same, with dehydration, sterilization and mineralization of the same, thereby obtaining a granular husk ash.

2. Product of Claim 1, wherein said thermal treatment is carried out by laying down natural husk at the base of burning smokestacks, subjecting it there to toasting up to the incineration of the same, with dehydration, sterilization and mineralization of the same, thereby obtaining a granular husk ash.

3. Derivative product of husk of Claim 1, wherein said husk is rice husk.

4. Substrate for horti-floriculture composed of a mix including the derivative product of husk of Claim 3.

5. Substrate for horti-floriculture of Claim 4, wherein said mix further includes peat.
